# EUROPEAN PATENT APPLICATION

(11) **EP 1 571 870 A1**
(43) Date of publication of application: **07.09.2005**
(21) Application number: 03770100.0
(22) Date of filing: 31.10.2003
(51) Int. Cl.: H04R 1/00, H04R 1/40, G03B 21/60, H04N 5/74

(54) **ARRAY SPEAKER EQUIPPED WITH PROJECTION SCREEN**

(30) Priority: 10.12.2002 JP 2002357393
(71) Applicant: SONY CORPORATION, Tokyo 141-0001 (JP)
(72) Inventor: SASAKI, Toru Sony Corporation, Shinagawa-ku, Tokyo 141-0001 (JP)
(74) Representative: Turner, James Arthur
(86) International application number: PCT/JP2003/014018
(87) International publication number: WO 2004/054314

(57) **Abstract**

The present invention is directed to an array speaker apparatus with projection screen adapted so that sound image localization of sound of the center channel is located at the center of the projection screen, which comprises an array speaker body (31) constituted by plural speaker units (33), and a projection screen (20) for displaying a projected image. The respective plural speaker units (33) are loaded into individual cabinets (41). Those speaker units are loaded so that the speaker units (33) are located at the inside of the cabinets relative to plane surfaces (41a) of sound wave radiation side of the cabinets. The array speaker body (31) is caused to be of the configuration in which plural cabinets are one-dimensionally or two-dimensionally arranged so that plane surfaces (41a) of the sound wave radiation side flush with each other. The projection screen is attached to the sound wave radiation surface side of the array speaker in the state in contact with plane surfaces of the sound wave radiation side of the plural cabinets, or close thereto.

## Description

### Technical Field

The present invention relates to a speaker apparatus with projection screen suitable when used in the case where, e.g., contents of movie, etc. are reproduced.

This Application claims priority of Japanese Patent Application No. 2002-357393, field on December 10, 2002, the entirety of which is incorporated by reference herein.

### Background Art

Array speakers in which plural speaker units are one-dimensionally or two-dimensionally disposed so that structure of the panel type is provided can change or set directivity characteristic thereof and/or sound filed characteristic with very high degree of freedom as compared to conventional separate speakers.

For example, delays are provided between audio signals to be delivered to respective plural speaker units, and/or amplitude adjustment thereof is made to thereby allow directivity characteristic of the array speaker to have beam-shape to provide audio services every listeners, or to reflect sound wave onto the ceiling or the wall surface thereafter to send those sound waves to the listener, thus making it possible to substantially arbitrarily set sound source direction. Alternatively, there can be constructed speaker systems of various forms such that wave front of sound wave radiated from the array speaker is controlled to simulate point sound source or surface sound source, etc., or to have ability to make muting operation at a specific position, etc.

Speaker systems in which the characteristic (property) of the array speaker as described above is utilized to dispose a single array speaker, e.g., at the front and forward portion of the listening position to perform acoustic (sound) reproduction of 2 (two) channels or more only by single array speaker are proposed in the Japanese Patent Application Laid Open No. 1997-233588 publication and the Japanese Patent Application Laid Open No. 1994-205496 publication.

Such speaker systems are suitable for audio reproduction of the system which is adapted for reproducing sound along with image such as movie, etc. Namely, sound waves radiated from the array speaker are caused to have beam-shaped directivity to reflect such sound waves onto the wall surface of the side direction and/or the wall surface of the backward direction of listener, and the ceiling, etc. to allow those sound waves to be reached to the listener to allow the listener to perceive as if sound source exists in a direction of the wall to which sound wave has been last reflected thus to permit sound image localization in all directions only by array speaker of single panel disposed at the forward direction of the listener. As a result, e.g., multi-channel surround reproduction of 5.1 channel can be performed.

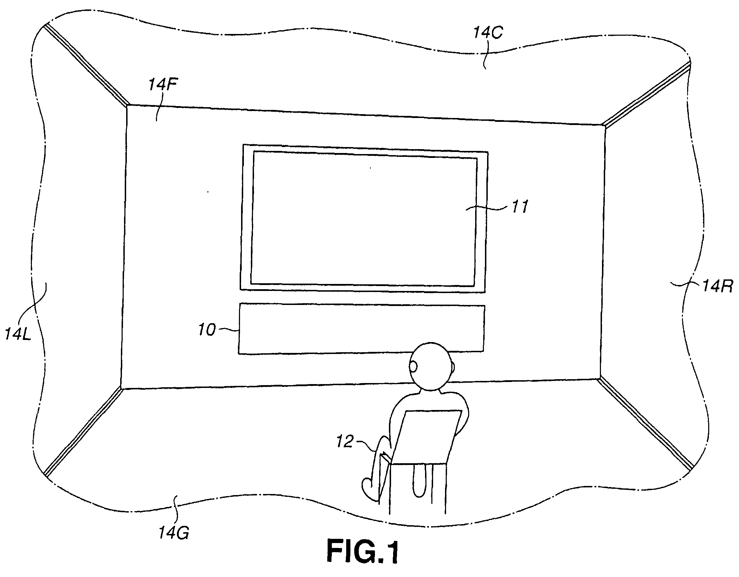

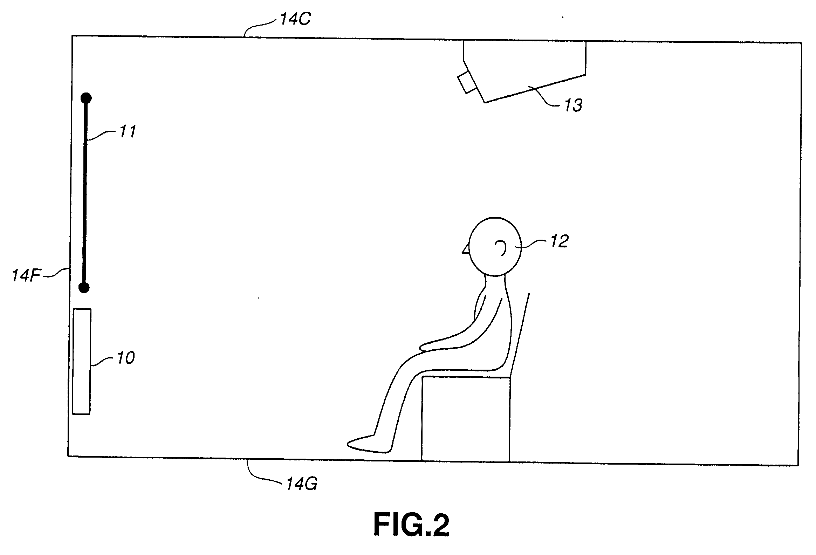

As an AV (Audio and Visual) system utilizing the speaker systems of this kind, there is proposed a system of the arrangement configuration as shown in FIGS. 1 and 2.

In this example, listening environment (listening room) is assumed to be a room such as an ordinary parallelepiped. At the left and right side directions of the listener 12, there exist wall surfaces 14L, 14R. At the upper portion of the listener 12, there exists a ceiling 14C. The listener sits down on a chair provided on a floor 14G.

In this example, a video projector 13 is attached at the ceiling 14C of the room as shown in FIG. 2. At the wall 14F side of the front face of the room when looked from the listener 12, there is provided a projection screen 11 for displaying image projected by a video projector 13. At the lower portion of the projection screen 11, an array speaker 10 is disposed. In this example, the listener 12 sits down in a manner to look at projection screen 11 at the front face thereof.

Speaker unit drive signals from an audio signal generating circuit for array speaker (not shown) are respectively delivered to respective plural speaker units constituting the array speaker 10. The speaker unit drive signals are generated with respect to audio signals of respective channels of a multi-channel surround signal, and are generated so that directivities, etc. of sound waves from the array speaker by respective signals are caused to be desired directivities.

For example, from an audio signal of the right channel, there are generated plural speaker unit drive signals in which sound waves from the array speaker are caused to have beam-shaped directivity, and those sound waves are reflected on the wall surface 14R of the right side of the listener 12, and are then reached to the listener 12 so that they are heard. Similarly, from an audio signal of the left channel, there are generated plural speaker unit drive signals in which sound waves from the array speaker are caused to have beam-shaped directivity, and are reflected on the wall surface 14L of the left side of the listener 12, and are then reached to the listener 12 so that they are heard.

Moreover, from an audio signal of the center channel, there are generated plural speaker unit drive signals in which sound waves from the array speaker 10 are directly reached to the listener 12 so that they are heard. Further, from audio signals of backward left and right channels, there are generated plural speaker unit drive signals in which sound waves from the array speaker are caused to have beam-shaped directivity, and are reflected on the ceiling, and left and right wall surfaces and backward wall surface of listener, and are then reached to the listener 12 so that they are heard.

In accordance with the AV system as described above, since the listener 12 feels as if sound sources of respective channels exist in arrival directions of sound waves, multi-channel surround reproduction of 5.1 channel can be performed by single array speaker 10 provided at the lower portion of the projection screen 11 of the front face of the room.

The panel-shaped array speaker 10 has the excellent characteristic that floor occupation area for installation can be reduced, and even if dimensions of the room, etc. are changed, radiation direction of the beam-shaped sound wave is changed so that desired stereo-feeling and/or multi-channel surround feeling can be obtained.

In the case of the system configuration as described above, since the array speaker 10 is provided at the lower portion of the projection screen 11, particularly localization position of sound of the center channel in which sound wave is caused to be directly reached to the listener 12 results in the position of the array speaker 10 at the lower portion of picture of the projection screen 11.

Audio information recorded along with image information in DVD (Digital Versatile Disc), etc. as the multi-channel surround system are produced (made) with an intention such that sounds of the center channel and/or left and right forward channels are caused to undergo sound image localization on the screen as in the case of the screening (exhibition) system of movie theater. Accordingly, the fact that sound image of the center channel is localized at the lower portion of the projection screen 11 results in unnatural reproduction sound field. In this respect, in the screening system of the movie theater, since sound is reproduced by speakers disposed at the screen rear surface when viewed from audiences (listeners), i.e., at the backward side of the screen, sound of the center channel is caused to correctly undergo sound image localization at the central portion of the screen.

### Disclosure of the Invention

An object of the present invention is to provide a novel array spaker apparatus with projection screen which can solve problems that prior arts as described above have.

Another object of the present invention is to provide an array speaker apparatus with projection screen in which sound image localization position of sound of the center channel is caused to be the center of the projection screen.

An array speaker apparatus with projection screen according to the present invention proposed in order to attain the objects as described above, which comprises: a plurality of speaker units; a plurality of cabinets each having an opening portion and adapted for accommodating each of the plurality of speaker units in such a manner that vibration plates are located at an internal side relative to the opening portions; and a projection screen serving as sound tranmission screen and for displaying a projected image, wherein the plurality of cabinets are arranged so that the opening portions thereof are flush with each other, and are attached in a state where the projection screen is caused to be in contact with the opening portions, or is close thereto.

In this apparatus, the projection screen is extended toward the opening portion side of the cabinet in such a manner to cover all plane surfaces having opening portions of the plurality of cabinets.

Moreover, a buffer material is provided at plane surfaces having opening portion of the cabinet.

Further, it is desirable that the projection screen is extended in a state in contact with the buffer member in such a manner to all cover plane surfaces having opening portions of the plurality of cabinets.

Furthermore, a frame is provided at the peripheries of the plurality of cabinets, and the projection screen is extended and stretched toward the frames.

In the apparatus according to the present invention, there are included power amplifiers for generating unit drive signals delivered to each of the plurality of speaker units. The power amplifiers respectively have a plurality of output channels, and the plurality of speaker units and the plurality of cabinets which correspond to the number of output channels of the power amplifier are integrally formed.

The apparatus according to the present invention further comprises a directivity formation circuit constituted by a plurality of filter circuits, thus to input an input audio signal to the plurality of filter circuits to deliver outputs of the respective filter circuits to the plurality of speaker units to thereby obtain sound wave having a predetermined directivity.

Another array speaker apparatus with projection screen according to the present invention comprises a plurality of speaker modules each including: a speaker unit; a cabinet having an opening portion and adapted for accommodating the speaker unit so that a vibrating plate is located at an internal side relative to the opening portion; and a projection screen serving as sound transmission screen for displaying a projected image, and extended and stretched toward the opening portion side of the cabinet in such a manner to cover the plane surface having the opening portion of the cabinet, wherein the plurality of speaker modules are arranged so that the projection screens are flush with each other.

Still further objects of the present invention and practical merits obtained by the present invention will become more apparent from the description of the embodiments which will be given below with reference to the attached drawings.

### Brief Description of the Drawings

FIG. 1 is a perspective view showing a configuration example of AV system using conventional array speaker apparatus.
FIG. 2 is a side view showing a configuration example of AV system using the conventional array speaker apparatus.
FIG. 3 is a side view showing a configuration example of AV system using an array speaker apparatus with projection screen according to the present invention.
FIG. 4 is an assembly perspective view showing array speaker constituting the present invention.
FIG. 5 is a perspective view showing, in an enlarged manner, a portion of the array speaker.
FIG. 6 is a side cross sectional view showing, in an enlarged manner, a portion of the array speaker.
FIG. 7 is a perspective view showing the array speaker.
FIG. 8 is a perspective view showing the entirety of the array speaker apparatus with projection screen according to the present invention.
FIG. 9 is a cross sectional view showing the essential part of the array speaker apparatus with projection screen according to the present invention.
FIG. 10 is a circuit diagram showing audio signals of 1 (one) channel of audio signal generating circuit for array speaker used in the present invention.
FIG. 11 is a side view for explaining the system configuration for measuring frequency characteristic of radiation sound by the array speaker apparatus with projection screen according to the present invention.
FIG. 12 is a view showing frequency characteristic of radiation sound from the speaker.
FIGS. 13A to 13E are views showing respective examples of frequency characteristics of sound wave transmitted through projection screen from the speaker.
FIG. 14 is a side cross sectional view showing another example of the array speaker apparatus according to the present invention.
FIG. 15 is a plan view showing an arrangement example of speaker unit used in the array speaker apparatus according to the present invention.

### Best Mode for Carrying Out the Invention

The array speaker apparatus with projection screen according to the present invention will now be described with reference to the attached drawings.

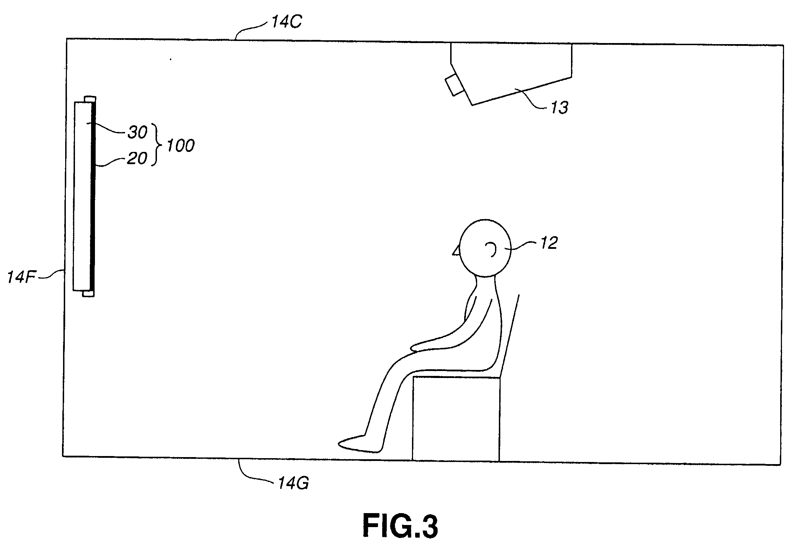

FIG. 3 shows an arrangement example of AV (Audio and Visual) system constituted by using the array speaker apparatus according to the present invention. The array speaker apparatus 100 is caused to be of the configuration in which a projection screen 20 is provided at the front face side serving as sound radiating surface of the array speaker 30. In this example, as the projection screen 20, sound transmission screen is used. The sound transmission screen has a large number of fine holes opened every predetermined intervals.

As shown in FIG. 3, the array speaker apparatus 100 is provided at the wall 14F side of the front face of the room when viewed from a listener 12, and is adapted so that image projected by a video projector 13 is displayed on the projection screen 20. As other components, there are employed components similar to those of the previously described AV system shown in FIGS. 1 and 2.

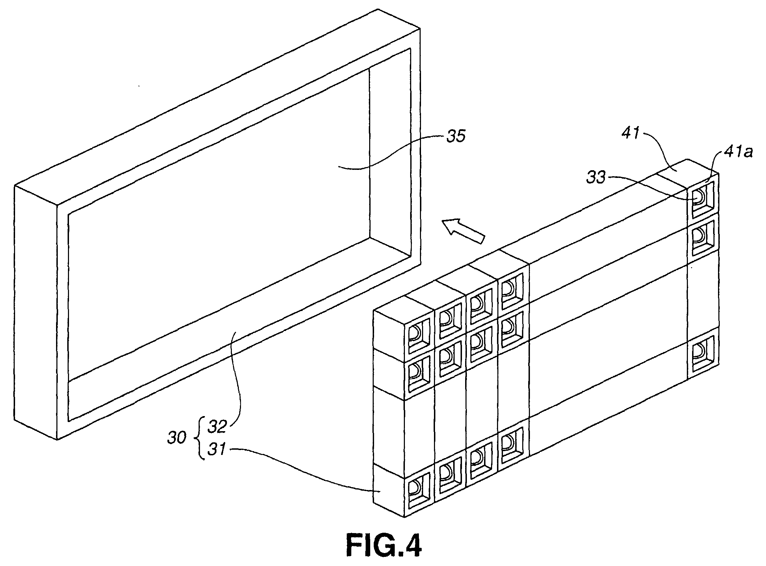

FIGS. 3 to 6 show the configuration of the array speaker 30 used in the present invention. As shown in FIG. 4, the array speaker 30 of this example is composed of an array speaker body 31, and a frame 32, and is caused to be of the configuration in which the array speaker body 31 is accommodated within the frame 32. Although not shown in FIG. 4, the projection screen 20 is fixed to the frame 32 at upper and lower sides or left and right sides, or four side portions of upper and lower, and left and right portions so that it is extended and stretched.

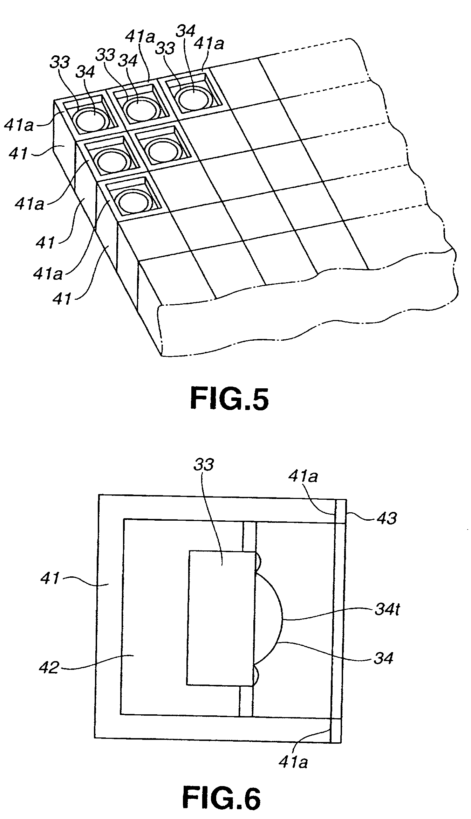

In the array speaker 30 of this example, as shown in FIGS. 4 and 5, respective plural speaker units 33 constituting the array speaker body 31 are accommodated within cabinets 41 for individual speaker units.

In this example, the cabinet 41 is caused to have substantially cubic shape or parallelepiped shape, and is attached so that the speaker units 33 are accommodated therewithin. As the speaker unit 33, there is used, e.g., small dome-type unit having aperture of 8 cm. Vibration plates 34 of the respective speaker units 34 are exposed from the opening portions of the cabinets 41 toward the external as shown, and are adapted so that sound waves by vibrations of the speaker units 33 are radiated from the opening side of the cabinets 41.

FIG. 6 shows a cross sectional view of one cabinet 41 to which the speaker units 33 are attached. At the speaker unit 33, as shown in FIG. 6, a summit portion 34t of the vibration plate 34 is attached to the cabinet 41 so that it is located at the cabinet 41 internal side relative to the end surface 41a of the sound wave radiation side of the speaker unit 33 of the cabinet 41.

This is because also when the projection screen 20 is extended so as to adhere closely to the end surface 41a of the sound wave radiation side of the speaker unit 33 of the cabinet 41 as described later or come into contact therewith, the projection screen 20 is caused to be prevented from coming into contact with the vibration plate 34 of the speaker unit 33.

In this example, as shown in FIG. 6, within the cabinet 41, a back pressure chamber is formed at the rear surface portion opposite to the vibration plate 34 side of the speaker unit 33. A sound absorption material 42 such as glass wool, etc. is filled or attached at the inside or a partial wall surface of the back pressure chamber. In the example shown in FIG. 6, there is shown the example where the sound absorption material 42 such as glass wool, etc. is filled.

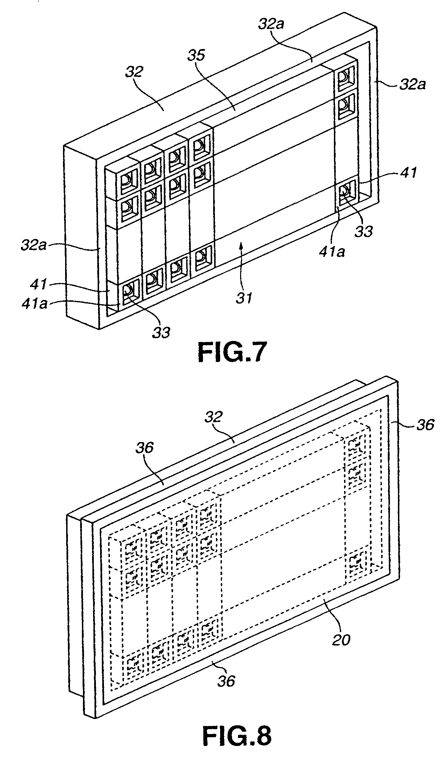

Moreover, at the end surface 41a of the sound wave radiation side of the speaker unit 33 of the cabinet 41, as shown in FIG. 6, a buffer material 43 consisting of felt, rubber, gel-shaped rubber or cellular polyurethane, etc. is attached in square form. In FIGS. 6 and 7, illustration of the buffer material 43 is omitted.

As shown in FIGS. 6 and 7, in the present invention, plural cabinets 41 in which speaker units 33 are attached in a manner as described above are two-dimensionally arranged so that there results the state such that vibration plates 34 of the speaker unit 33 are arranged in the exposed state in such a manner that they are all located in the same direction. The adjacent cabinets are connected to each other so that the array speaker body 31 is constituted.

At this time, plural cabinets are connected in such a manner that all end surfaces 41a of the two-dimensionally arranged plural cabinets 41 flush with each other, i.e., one surface is formed by all end side surfaces 41a of the two-dimensionally arranged plural cabinets 41 so that the array speaker body 31 is constituted. Accordingly, the plane surface formed by the end surfaces 41a of the two-dimensionally arranged plural cabinets 41 results in sound wave radiation surface of the array speaker body 31.

It is to be noted that, although not shown, at the rear surface side of the speaker units 33 of the respective cabinets 41, there are respectively provided speaker terminals supplied with speaker unit drive signals to be delivered to the speaker units 33.

In this example, the frame 32 comprises, as shown in FIG. 6, an opening space 35 serving as accommodating space of the array speaker body 31. Dimensions of length × breadth × depth of the opening space 35 are caused to be larger than dimensions of length × breadth × depth of the array speaker body 31 of the configuration as described above. As shown in FIG. 7, the array speaker body 31 is accommodated within the frame 32 in such a manner that the periphery thereof is surrounded by the frame 32 within the opening space 35.

At this time, the sound wave radiation surface of the array speaker 30, i.e., plane surface consisting of end surfaces 41a of the plural cabinets 41, and end surface 32a of the sound wave radiation surface side of the array speaker 30 of the portion which forms the opening space 35 of the frame 32 are caused to flush with each other.

Then, as shown in FIG. 8, the projection screen 20 is extended and fixed to the frame 32 at the sound wave radiation surface side of the array speaker 30 formed in a manner as described above. The projection screen 20 is fixed by holding plates 36 at the peripheral portion of the frame 32 in the example shown in FIG. 8. Here, the frame 32 is constituted by stiff material enough to sufficiently tolerate tension of extension or stretch of the projection screen 20, and is constituted so as to have structure having such strength.

The holding plate 36 may be caused to have the same shape slightly larger than that of the frame 32 to hold or put four sides of the projection screen 20 between the holding plate 36 and the frame 32 to extend the projection screen 20 with respect to the frame 32. The holding plate 36 may be caused to be plates respectively independent at upper and lower, and left and right portions to respectively hold or put four sides of the projection screen between those plates and the frame 32 to fix them by means of rivet or screw.

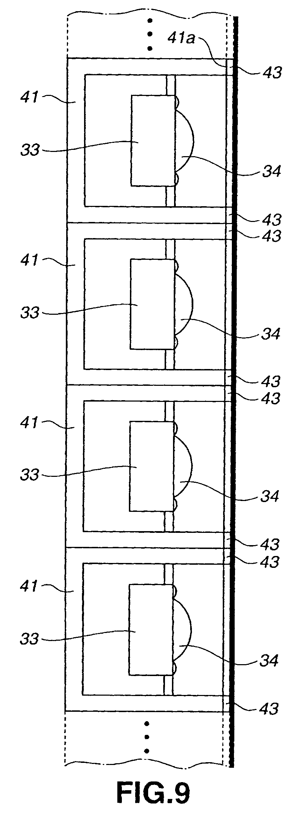

In the state extended and stretched in this way, as shown in FIG. 9, the projection screen 20 is caused to be in contact with the buffer materials 43 formed at the end surfaces 41 a of cabinet 41 for respective speaker units of the array speaker body 31 or is caused to adhere closely thereto.

Conversely, in the state where the projection screen 20 is attached in the extended and stretched state and fixed to the frame 32, the array speaker body 31 may be attached to the inside of the opening space 35 of the frame 32 in a manner to force the end surface 41a side of the cabinet 41 with respect to the projection screen 20.

In a manner as stated above, as shown in FIG. 9, the array speaker body 31 and the projection screen 20 are fixed with respect to the frame 32 in the state where the buffer materials 43 fitted (attached) on respective end surfaces 41a of the cabinet 41 for plural speaker units are in contact with the rear surface of the projection screen 20.

It is to be noted that while buffer materials 43 of cabinet 41 for respective speaker units and projection screen 20 may be fixed by adhesive agent, etc., it is desirable that both members are not fixed in order to cope with repair/exchange of the speaker unit 33, etc. In addition, since sufficient characteristic can be obtained as the array speaker 30 of this example as described later even in the state where the rear surface of the projection screen 20 is close to the buffer material 43 with spacing being provided in such a manner that it is not closely in contact with buffer material 43, there is no necessity to dare to fix the buffer material 43 and the projection screen 20 by adhesive agent, etc.

Then, the audio signal generating circuit for array speaker, which serves to generate signals delivered to respective speaker units 33 of the array speaker 30, will be explained. The array speaker audio signal generating circuit serves to generate plural unit drive signals delivered to respective plural speaker units 33 from audio signals of respective channels of the multi-channel surround system.

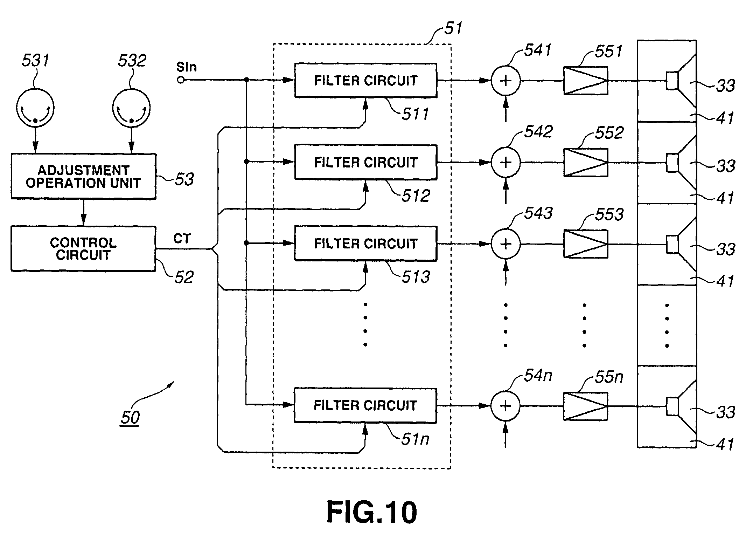

An example of an array speaker audio signal generating circuit 50 with respect to 1 (one) channel of input audio signal will be explained below with reference to FIG. 10. In practice, circuits 50 of FIG. 10 are provided by the number of channels. It is to be noted that control circuit 52 which will be described later may be provided in a manner common to those many channels.

As shown in FIG. 10, the array speaker audio signal generating circuit 50 of the case of this example comprises a directivity formation signal generating circuit 51, a control circuit 52, an adjustment operation unit 53, channel synthesis circuits 541, 542, 543, ···, 54n (n is the number of speaker units 33), and output amplifiers 551, 552, 553, ···, 55n.

An audio input signal of channel is delivered to the directivity formation signal generating circuit 51 through an audio input terminal Sin. The directivity formation signal generating circuit 51 generates plural unit drive signals delivered to plural speaker units 33 constituting the array speaker body 31 on the basis of control signal CT from the control circuit 52 from input audio signal of the corresponding channel inputted through the audio input terminal Sin. These plural unit drive signals are generated so that the direction of the main axis of directivity of sound wave radiated in a beam form from the array speaker body 31 is caused to be the direction determined by the control signal CT from the control circuit 52.

The control circuit 52 is supplied with an adjustment operation signal from the adjustment operation unit 53. At the adjustment operation unit 53, there are provided a knob 531 for direction adjustment of the main axis of directivity of beam-shaped sound wave radiated from the array speaker body 31, and a knob 532 for amplitude adjustment of the beam-shaped sound wave.

Further, adjustment operation of the direction adjustment knob 531 is performed so that the portion relating to delay quantity control of the control signal CT is adjusted so that direction of the main axis of the directivity of the beam-shaped sound wave determined by the unit drive signal from the directivity formation signal generating circuit 51 is adjusted by the control signal CT. In addition, adjustment operation of the amplitude adjustment knob 532 is performed so that the portion relating to the amplitude control of the control signal CT is adjusted so that amplitude (level) of the beam-shaped sound wave determined by the unit drive signal is adjusted by the control signal CT.

The directivity formation signal generating circuit 51 is composed of filter circuits 511, 512, 513, ···, 51n of which number is the same as the number of speaker units 33 constituting the array speaker body 31, whereby audio signals of corresponding channels inputted through the input terminal Sin are delivered to respective filter circuits 511, 512, 513, ···, 51n.

Further, as shown in FIG. 10, the control signal CT from the control circuit 52 is bundle of plural control signals individually delivered to respective filter circuits 511, 512, 513, ···, 51 n of the directivity formation signal generating circuit 51.

The filter circuits 511, 512, 513, ···, 51n are constituted by, e.g., analog filters or digital filters. In the case where those filter circuits are constituted by digital filters, it is required that an input audio signal from the audio input terminal Sin is caused to be digital audio signal, or is converted into digital audio signal at the input stage of the directivity formation signal generating circuit 51.

In the case where respective filter circuits 511, 512, 513, ···, 51n are constituted by analog filters, e.g., capacitance value of variable capacity element and/or resistance value of variable resistor are adjusted by control signal CT so that delay time and amplitude are adjusted. Moreover, in the case where those filter circuits are constituted by digital filters, the control signal CT is bundle of sets of filter coefficients delivered to respective filter circuits, and change control of filter coefficient values of those sets is performed so that delay time and amplitude are adjusted.

In a manner stated above, plural unit drive signals generated at the directivity formation signal generating circuit 51 are delivered to respective corresponding speaker units 33 of the array speaker body 31 respectively through channel synthesis circuits 541, 542, 543, ···, 54n and output amplifiers 551, 552, 553, ···, 55n (n is the number of speaker units 33).

For example, from an audio signal of the right channel, at the array speaker audio signal generating circuit 50, there are generated such plural speaker unit drive signals having directivity in which beam-shaped sound waves radiated from the array speaker body 31 are reflected onto the wall surface 14R of the right side of the listener 12, and are then reached to the listener 12 so that they are heard. Moreover, from an audio signal of the left channel, at the array speaker audio signal generating circuit 50, there are generated such plural speaker unit drive signals in which beam-shaped sound waves radiated from the array speaker body 31 are reflected on the wall surface 14L of the left side of the listener 12, and are then reached to the listener 12 so that they are heard.

Further, from an audio signal of the center channel, at the array speaker audio signal generating circuit 50, there are generated plural speaker unit drive signals having directivity in which beam-shaped sound waves radiated from the array speaker body 31 are directly reached to the listener 12 so that they are heard. Also with respect to other channels, there are generated plural speaker unit drive signals so as to have a directivity such that sound image by an audio signal of corresponding channel is located at a desired localization position.

As the result of the fact that plural speaker unit drive signals as described above are delivered to plural speaker units 33 of the array speaker body 31, beam-shaped sound waves having directivity as previously described are radiated from the array speaker body 31. Further, the sound waves radiated from the array speaker 13 are transmitted through the projection screen 20, and proceed (travel) toward the external (i.e., toward the direction where listener exists).

Accordingly, in the multi-channel surround reproduction, since an audio signal of the center channel is radiated in such a manner that it arrives at listener 12 from the projection screen 20, the listener 12 is permitted to listen to sound of the center channel without producing disagreement of feeling.

At this time, the projection screen 20 is slightly vibrated by sound wave radiated from the array speaker 13. However, since such displacement is very small, it hardly affects image projected onto the projection screen 20.

Moreover, since vibration of the projection screen 20 is limited by buffer material 43 having dimensions only sufficient to surround the peripheral portion of the small speaker unit 33, natural oscillation of the projection screen 20 does not take place within low audio frequency band. In addition, such vibration is sufficiently suppressed by dumping effect by the buffer material 43.

Further, leakage or coupling of sound waves between adjacent speaker units 33 is sufficiently attenuated by existence of the buffer material 43. Accordingly, in taking into consideration traveling characteristics and sound field characteristic of sound wave radiated from the speaker unit 33, it is sufficient to make acoustic design on the premise that respective sound waves are radiated from the projection screen 20.

In a manner as stated above, in accordance with the present invention, there can be obtained the effect that array speaker body 31 is disposed at the rear surface side of the projection screen 20 so that sound image by audio signal of the center channel can be located substantially at the center of the projection screen 20, and any effect is hardly given to image projected onto the projection screen in that case.

While the projection screen 20 is caused to be in contact with, through the buffer material 43, end surface 41a of the cabinet 41 within which speaker units 33 constituting the array speaker 30 are individually accommodated or to adhere closely thereto, it is not necessarily required that the projection screen 20 is caused to be in contact with sound wave radiation surface of the array speaker 30, but if such projection screen is disposed in a manner close to the sound wave radiation surface of the array speaker 30, sufficient characteristic can be obtained.

Accordingly, there may be employed a configuration in which the projection screen 20 is extended and stretched toward the frame 32, and the array speaker body 31 is disposed in such a manner that its sound wave radiation surface is close thereto through a slight space between the array speaker body 31 and the projection screen 20 to fix it at the frame 32. In this case, it is not required to provide buffer material 43.

The fact that even if such an approach is employed, sufficient acoustic reproduction characteristic can be obtained was experimentally confirmed. Namely, the inventors of this Application conducted experiment on the basis of the condition as described below.

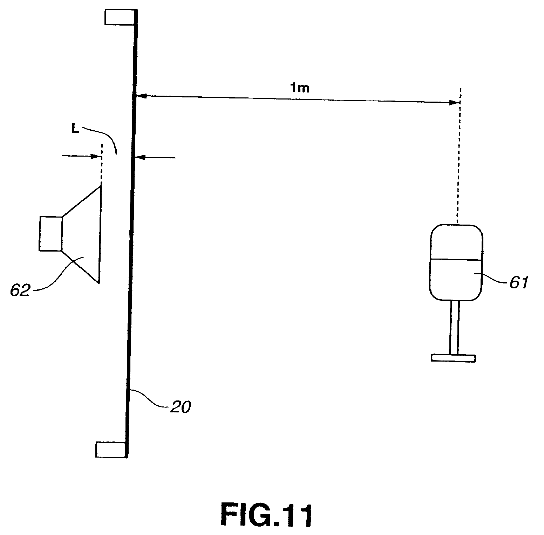

FIG. 11 is a view for explaining the apparatus configuration for this experiment. Namely, as shown in FIG. 11, a microphone 61 is disposed at a position apart by 1 (one) meter from the front face (display surface of projected image) of the projection screen 20. On the other hand, a speaker 62 is installed (provided) at a position apart by distance L from the rear surface of the projection screen 20. Further, sound waves radiated from the speaker 62 are picked up by the microphone 61 to convert the sound waves into electric signal, i.e., audio signal to perform frequency analysis of that audio signal to measure frequency characteristic of sound (speech) transmitted through the projection screen 20.

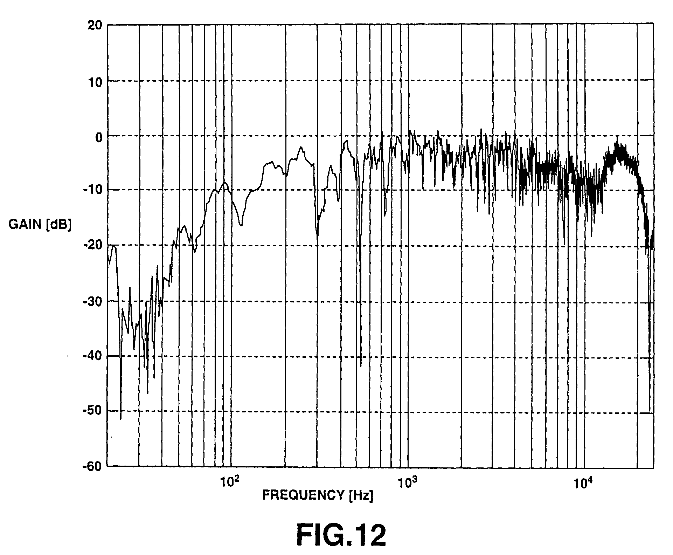

FIG. 12 shows frequency characteristic when sounds are collected by the microphone 61 without intervention of the projection screen from the speaker 62 for performing comparison with frequency characteristic of sounds collected by the apparatus of FIG. 11.

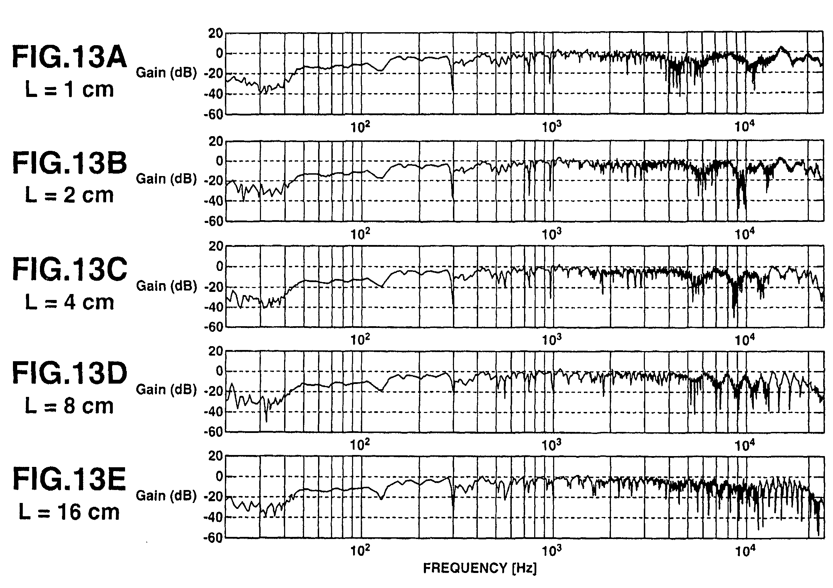

Then, the results in which distance L between the projection screen 20 and the speaker 62 is variously changed to perform collection of sounds by the microphone 61 to perform frequency analysis of the results are shown in FIGS. 13A to 13E.

FIG. 13A shows the case where distance L between the speaker 62 and the projection screen 20 is 1 cm. FIG. 13B shows the case where distance L between the speaker 62 and the projection screen 20 is 2 cm. FIG. 13C shows the case where distance L between the speaker 62 and the projection screen 20 is 4 cm. FIG. 13D shows the case where distance L between the speaker 62 and the projection screen 20 is 8 cm. FIG. 13E shows the case where distance L between the speaker 62 and the projection screen 20 is 16 cm.

When comparison between FIG. 13A and FIG. 12 is performed, in the case where spacing is given by distance L such as about 1 cm even if the speaker 62 is not in contact with the projection screen 20, it is understood that frequency characteristic which is substantially similar to the frequency characteristic of FIG. 12 can be obtained in the case where sound wave from the speaker 62 is received without being transmitted through the projection screen 20.

Further, if distance L between the speaker 62 and the projection screen 20 is in proximity state of the order of 4 cm, the frequency characteristic becomes similar to the substantially frequency characteristic in the case where projection screen does not exist shown in FIG. 12 although degradation takes place to a little degree. However, when distance L is above 8 cm or more, influence by interference between sound wave radiated from the speaker 62 and reflected wave from the projection screen 20 appears at the high frequency band side. As a result, degradation becomes large.

From facts as described above, in the case where the projection screen 20 is caused to be in contact with the sound wave radiation surface of the array speaker body 31 or to adhere closely thereto as in the above-described example, it is understood that it is not only a matter of course that listener 12 can listen to reproduction sound similar to the case where projection screen 20 substantially does not exist through sound transmission projection screen 20, but also even if space exists between the projection screen 20 and the sound wave radiation surface of the array speaker body 31, the distance L between the speaker and the projection screen 20 is caused to be 8 cm or less, or is preferably caused to be 4 cm or less so that satisfactory acoustic characteristic can be obtained.

While the projection screen 20 is extended with respect to the frame 32 in such a manner to come into contact with radiation surface of the array speaker body 31 accommodated within the frame 32 or to adhere closely thereto in the above-described respective examples, projection screens of sound transmission characteristic are attached to respective cabinets 41 for speaker units through buffer materials, or without intervention of buffer materials to two-dimensionally arrange cabinets 41 for speaker units to which those projection screens have been attached to thereby form an array speaker apparatus with projection screen.

Moreover, the audio signal generating circuit 50 for array speaker shown in FIG. 10 may be installed (provided) at space within the frame 32 along with the array speaker body 31. In that case, the projection screen may be extended with respect to the frame 32 in a manner to also cover installation space of the audio signal generating circuit 50 for array speaker in the state where such installation space is also included, and the portion of the array speaker audio signal generating circuit 50 may be constituted in a manner such that it is not covered by the projection screen.

Further, respective output amplifiers 551, 552, 553, ···, 55n of the array speaker audio signal generating circuit 50 may be provided within the cabinet 41 for speaker unit.

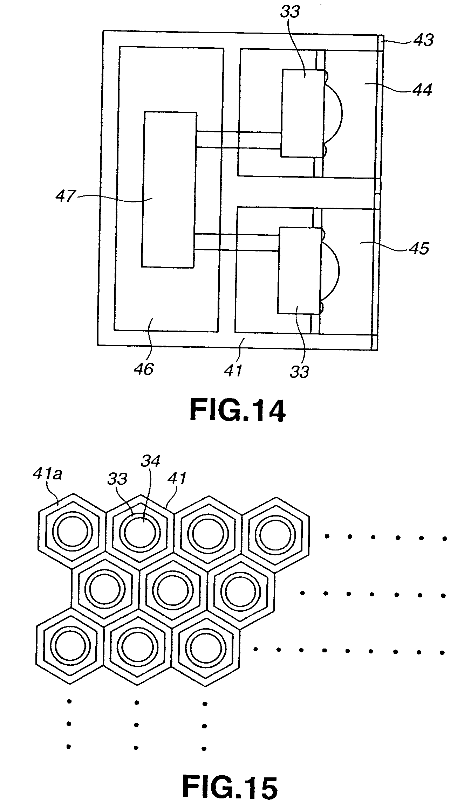

In that case, since many output amplifier modules for 2 (two) channels (for stereo) can be obtained at a low cost as the output amplifier module, the cabinet 41 for speaker unit may be caused to be of the configuration, as shown in FIG. 14, in which small chambers 44, 45 for respectively independently attaching two speaker units 33 are provided, and small chambers 46 for amplifier installation which are adjacent to both small chambers 44, 45 for those two speaker units are provided to accommodate an output amplifer module 47 for 2 (two) channels (for stereo) within the small chamber 46 for amplifier installation.

In this case, plural cabinets for speaker units in which speaker units 33 are accommodated two by two are two-dimensionally arranged so that the array speaker body is formed.

Moreover, while speaker units are arranged in tetragonal lattice form in the above-described examples, those speaker units may be arranged, e.g., in zigzag shape. For example, the cabinet 41 may be caused to have hexagonal cylindrical shape in place of cube or parallelepiped, etc. and the hexagonal cylindrical shaped cabinets 41 are arranged in honey comb form as shown in FIG. 15 to arrange the speaker units 33 in zigzag shape.

Further, while adjacent cabinets 41 for speaker unit are arranged in the state adhering closely to each other in such a manner that they are connected in the above-described examples, cabinets 41 for speaker unit may be arranged in a manner suitably separate from each other.

Furthermore, while speaker units are all two-dimensionally arranged in the above-described examples, it is a matter of course that those speaker units may be one-dimensionally arranged.

It is to be noted while the present invention has been described in accordance with certain preferred embodiments thereof illustrated in the accompanying drawings and described in the above description in detail, it should be understood by those ordinarily skilled in the art that the invention is not limited to embodiments, but various modifications, alternative constructions or equivalents can be implemented without departing from the scope and spirit of the present invention as set forth by appended claims.

### Industrial Applicability

As described above, in accordance with the present invention, in the case where, e.g., multi-channel surround reproduction is performed, audio signal of the center channel is caused to undergo sound image localization at the center of the projection screen. Thus, primary multi-channel surround feeling can be obtained.

Further, in accordance with the present invention, even when array speaker is provided at the rear surface side of the projection screen, since plural speaker units constituting the array speaker are respectively accommodated within individual cabinets and are in contact with the projection screen or are close thereto, there results slight (small) vibration displacement by sound wave every individual speaker units even if the projection screen is vibrated by sound waves radiated from those speaker untis. Thus, such vibration hardly affect image appreciation.

## Claims

1. An array speaker apparatus with projection screen, comprising:
a plurality of speaker units;
a plurality of cabinets each having an opening portion, and adapted for accommodating each of the plurality of speaker units so that vibration plates of the speaker units are located at an internal side relative to the opening portions; and
a projection screen serving as a sound transmission screen, and for displaying a projected image,
wherein the plurality of cabinets are arranged so that the opening portions thereof are flush with each other, and
the projection screen is attached in a state in contact with the opening portions or close thereto.

2. The array speaker apparatus with projection screen as set forth in claim 1,
wherein the projection screen is extended and stretched toward the opening portion side of the cabinets in such a manner to all cover plane surfaces having the opening portions of the plurality of cabinets.

3. The array speaker apparatus with projection screen as set forth in claim 1,
wherein buffer materials are provided at plane surfaces having the opening portions of the cabinets.

4. The array speaker apparatus with projection screen as set forth in claim 3,
wherein the projection screen is extended in a state in contact with the buffer materials in such a manner to all cover plane surfaces having the opening portions of the plurality of cabinets.

5. The array speaker apparatus with projection screen as set forth in claim 3,
wherein the projection screen is bonded to the buffer materials.

6. The array speaker apparatus with projection screen as set forth in claim 1,
wherein the projection screen is bonded to respective plane surfaces having the opening portions.

7. The array speaker apparatus with projection screen as set forth in claim 2,
wherein a frame is provided at the peripheries of the arranged plurality of cabinets, and the projection screen is extended and stretched toward the frame.

8. The array speaker apparatus with projection screen as set forth in claim 1,
wherein there are included power amplifiers for generating unit drive signals delivered to each of the plurality of speaker units.

9. The array speaker apparatus with projection screen as set forth in claim 6,
wherein the power amplifier has a plurality of output channels, and the plurality of speaker units and the plurality of cabinets which correspond to the number of output channels of the power amplifier are integrally formed.

10. The array speaker apparatus with projection screen as set forth in claim 1,
which further comprises a directivity formation circuit constituted by a plurality of filter circuits to input an input audio signal to the plurality of filter circuits to deliver outputs of the respective filter circuits to the plurality of speaker units to thereby obtain sound wave having a predetermined directivity.

11. An array speaker apparatus with projection screen, comprising a plurality of speaker modules each including:
a speaker unit;
a cabinet having an opening portion, and adapted for accommodating the speaker unit so that a vibration plate of the speaker unit is located at an internal side relative to the opening portion; and
a projection screen serving as a sound transmission screen for displaying a projected image, and extended and stretched toward the opening portion side of the cabinet in such a manner to cover plane surface having the opening portion of the cabinet,
wherein the array speaker apparatus with projection screen is caused to be of the configuration in which the plurality of speaker modules are arranged so that the projection screens are caused to be flush with each other.
